# EUROPEAN PATENT APPLICATION

(11) **EP 4 631 672 A1**
(43) Date of publication of application: **15.10.2025**
(21) Application number: 23900371.8
(22) Date of filing: 07.11.2023
(51) Int. Cl.: B23Q 7/04, B25J 13/00, B25J 19/00

(54) **FIXING DEVICE, OBJECT FIXING METHOD, AND OBJECT FIXING PROGRAM**

(30) Priority: 09.12.2022 JP 2022196720
(71) Applicant: Sumitomo Heavy Industries, Ltd., Tokyo 141-6025 (JP)
(72) Inventor: HARADA, Tatsuki, Yokosuka-shi, Kanagawa 237-8555 (JP)
(74) Representative: Louis Pöhlau Lohrentz
(86) International application number: PCT/JP2023/040062
(87) International publication number: WO 2024/122249

(57) **Abstract**

A fixing device 1 includes an auxiliary arm 2 that can move a workpiece W, a fixing arm 3 that can fix the workpiece W, and a control device 5 that controls operations of the auxiliary arm 2 and the fixing arm 3. The control device 5 causes the fixing arm 3 to fix the workpiece W in a state where the workpiece W is gripped and held in a predetermined posture by the auxiliary arm 2. Accordingly, the workpiece W can be always fixed in the same posture without depending on the hands of a worker (human). Therefore, the workpiece W can be automatically and suitably fixed.

## Description

### Technical Field

The present invention relates to a fixing device, an object fixing method, and an object fixing program.

### Background Art

In the related art, a device in which a tool or a workpiece (an object to be worked) is fixed to a robot arm and machining work, such as polishing or grinding, is performed on the workpiece is known (for example, see PTL 1).

In this type of machining work, the workpiece needs to be firmly fixed in a predetermined posture. Therefore, in general, a worker (human) fixes the workpiece.

### Citation List

### Patent Literature

[PTL 1] Japanese Unexamined Patent Publication No. 2017-1122

### Summary of Invention

### Technical Problem

It is useful to be capable of automating the fixing of the workpiece in the above-described machining work.

An object of the present invention is to automatically and suitably fix a workpiece.

### Solution to Problem

A fixing device according to an aspect of the present invention includes an arm unit that is capable of moving an object to be worked, a fixing unit that is capable of fixing the object to be worked, and a control unit that controls operations of the arm unit and the fixing unit, in which the control unit causes the fixing unit to fix the object to be worked in a state where the object to be worked is gripped and held in a predetermined posture by the arm unit.

### Advantageous Effects of Invention

According to the present invention, the workpiece can be automatically and suitably fixed.

### Brief Description of Drawings

Fig. 1 is a diagram showing a main view of a fixing device according to an embodiment.
Fig. 2 is a block diagram showing a schematic control configuration of the fixing device according to the embodiment.
Fig. 3A is a diagram illustrating a shape measuring instrument according to the embodiment.
Fig. 3B is a view illustrating the shape measuring instrument according to the embodiment.
Fig. 4 is a flowchart showing a procedure of workpiece fixing processing according to the embodiment.
Fig. 5A is a diagram illustrating the workpiece fixing processing according to the embodiment.
Fig. 5B is a diagram illustrating the workpiece fixing processing according to the embodiment.
Fig. 6 is a view showing a modification example of the fixing device according to the embodiment.

### Description of Embodiments

An embodiment of the present invention will be described in detail below with reference to the drawings.

### [Configuration of fixing device]

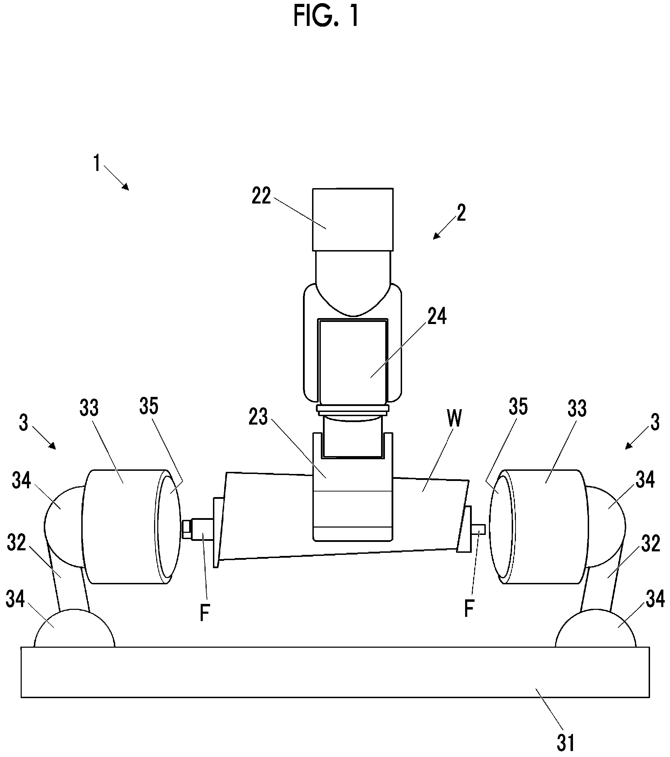

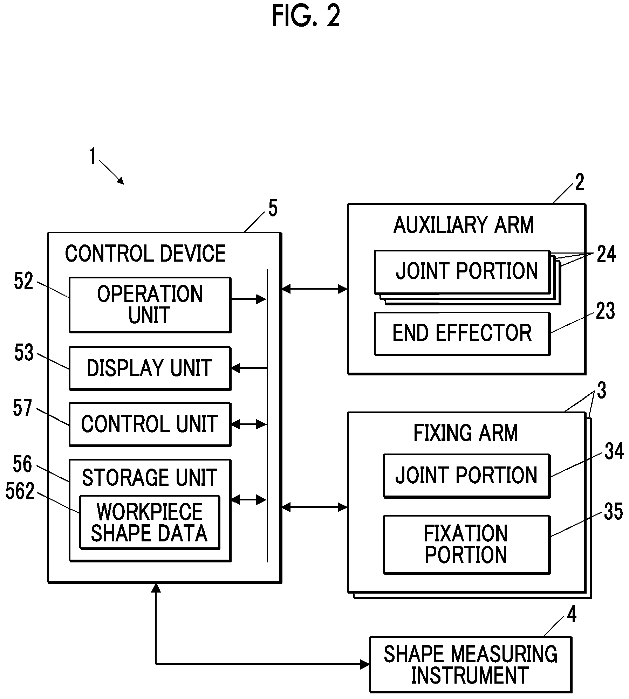

Fig. 1 is a diagram showing a main part of a fixing device 1 according to the present embodiment, and Fig. 2 is a block diagram showing a schematic control configuration of the fixing device 1.

As shown in Figs. 1 and 2, the fixing device 1 holds and fixes a workpiece (an object to be worked) W with an auxiliary arm 2 and fixing arms 3 that are robot arms. Predetermined machining (for example, polishing or the like) is performed on the workpiece W, which is fixed by the fixing device 1, by a machining tool (not shown).

Specifically, the fixing device 1 includes an auxiliary arm 2, a pair of fixing arms 3, a shape measuring instrument 4, and a control device 5.

The auxiliary arm 2 is an example of an arm unit according to the present invention. Although not particularly limited, the auxiliary arm 2 is a vertical articulated robot in the present embodiment. The auxiliary arm 2 includes a plurality of links 22 (only one link is shown in Fig. 1), an end effector 23, and a plurality of joint portions 24.

The plurality of links 22 are connected to each other in series with a base portion fixed to an environment (for example, a floor of a factory, an arm holding table, or the like) (not shown) as a base end part.

The end effector 23 is connected to a tip end of the plurality of links 22, and is a gripper that can grip the workpiece W in the present embodiment. However, the specific configuration of the end effector 23 is not particularly limited as long as the end effector 23 can grip and release the workpiece W based on a control command from the control device 5.

The plurality of joint portions 24 connect the plurality of links 22 and the end effector 23 such that the plurality of links 22 and the end effector 23 can pivot relative to each other. Each joint portion 24 is provided with a motor for driving the link 22 (or the end effector 23) connected to a tip end side of the joint portion 24 and an encoder for measuring a position (speed) of the motor (not shown).

The pair of fixing arms 3 is an example of a fixing unit according to the present invention, and is disposed to face each other at an interval and fixes the workpiece W in a state where the workpiece W is pinched between the pair of fixing arms 3.

Each of the fixing arms 3 includes a link 32 that is connected to a base table 31, an end effector 33 that is connected to a tip end side of the link 32, and joint portions 34 that connect the base table 31, the link 32, and the end effector 33 to allow the link 32 and the end effector 33 to pivot. The pair of fixing arms 3 is configured to have a degree of freedom in a direction in which the respective end effectors 33 are brought close to or moved away from each other (a left-right direction in Fig. 1) since the joint portions 34 pivot based on a control command from the control device 5.

The end effector 33 of each of the fixing arms 3 is provided with a fixation portion 35 for fixing the workpiece W. The fixation portion 35 is disposed inward in the pair of fixing arms 3 to face the fixation portion 35 of the other fixing arm 3.

The fixation portions 35 are configured to be capable of taking a fixing state where the workpiece W is fixed and a fixing release state where the fixing state is released, based on a control command of the control device 5. As described later, the fixation portions 35 are in the fixing release state in a normal state, and are brought into the fixing state after coming into contact with the workpiece W held in a predetermined posture between the pair of fixing arms 3.

Specifically, in a case where the fixation portions 35 fix fixed portions F of the workpiece W, the fixation portion 35 comes into contact with the fixed portion F to change the shape thereof according to the shape of the fixed portion F and fixes the fixed portion F in a state where the fixation portion 35 is in close contact with and covers the fixed portion F.

Examples of the fixation portion 35 include a supercooled fluid hand, a magneto rheological (MR) fluid gripping mechanism, a suction hand, and a tracing hand.

The supercooled fluid hand includes a fluid-filled part that is filled with a supercooled fluid (for example, a sodium acetate aqueous solution, supercooled liquid glycerin, or the like), and a vibration applying device that applies physical stimulation to the fluid-filled part. In a case where vibration is applied to the fluid-filled part by the vibration applying device in a state where the fluid-filled part is in close contact with the fixed portion F of the workpiece W, the fluid-filled part is solidified and fixes the fixed portion F.

The MR fluid gripping mechanism includes a fluid-filled part that is filled with an MR fluid, and a magnetic field generating unit that causes a magnetic field to act on the fluid-filled part. In a case where a magnetic field is generated in a state where the fluid-filled part is in close contact with the fixed portion F of the workpiece W, the fluid-filled part is solidified and fixes the fixed portion F.

The suction hand is also referred to as a Doraemon hand, and includes a rubber film having a multilayer structure in which a middle layer is filled with powder. In a case where a pressure is reduced in a state where the suction hand is in close contact with the fixed portion F, the rubber film is solidified in a state where the shape thereof is maintained and fixes the fixed portion F.

The tracing hand includes a tracing mechanism that includes a plurality of shafts capable of advancing and retreating in a direction in which the end effectors 33 are brought close to or moved away from each other. The plurality of shafts are fixed in a state where the plurality of shafts are in contact with the fixed portion F to be conformed to the shape of the fixed portion F, and fix the fixed portion F.

The workpiece W, which is an object to be worked, is a rod-shaped body made of metal in the present embodiment, and is, for example, a turbine blade. Both end portions of the workpiece W are thinned in a stepped shape, and form the fixed portions F to be fixed to the pair of fixing arms 3. In the present embodiment, the fixed portion F is not a portion to be machined and is formed in a relatively complicated shape.

The shape, material, and the like of the workpiece W are not particularly limited as long as the workpiece W can be gripped by the auxiliary arm 2 and can be fixed by the fixing arms 3.

The shape measuring instrument 4 measures the shape of the workpiece W and outputs acquired shape information to the control device 5. For example, the shape measuring instrument 4 is disposed between a workpiece mounting table on which workpieces W not fixed yet are to be placed and the fixing arms 3.

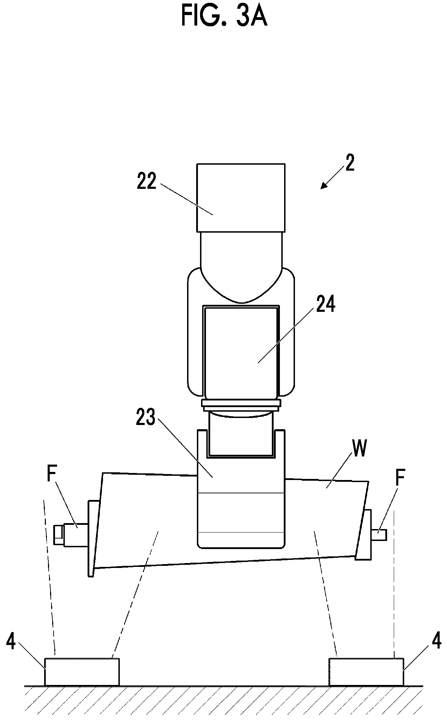

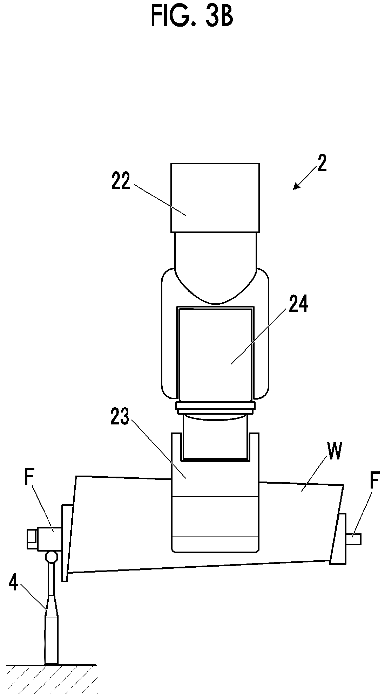

The type of the shape measuring instrument 4 is not particularly limited as long as the shape measuring instrument 4 can measure the shape of the workpiece W gripped by the auxiliary arm 2. For example, the shape measuring instrument 4 may be optical sensors or the like that can measure a shape in a non-contact manner as shown in Fig. 3A, or may be a contact type touch probe or the like as shown in Fig. 3B.

As shown in Fig. 2, the control device 5 is a computer that controls the operations of the auxiliary arm 2, the pair of fixing arms 3, and the shape measuring instrument **4.** Specifically, the control device 5 includes an operation unit 52, a display unit 53, a storage unit 56, and a control unit 57.

The operation unit 52 is an operation unit that performs various operations required for a user to operate the control device 5, and includes a pointing device, such as a mouse, and a keyboard.

The display unit 53 is, for example, a liquid crystal display, an organic electroluminescence display, or other displays, and displays various information based on display signals from the control unit 57. The display unit 53 may be a touch panel that also serves as a part of the operation unit 52, or may output voices.

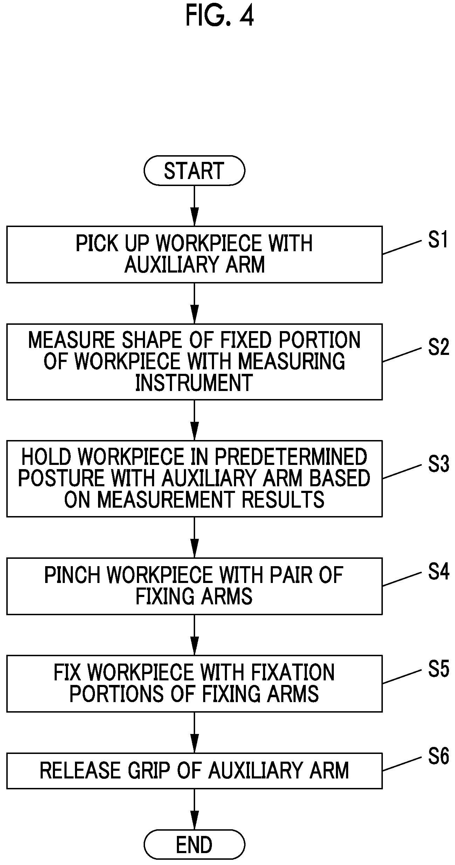

The storage unit 56 is, for example, a memory formed of a random-access memory (RAM), a read-only memory (ROM), or the like, stores various programs and data, and also functions as a work area of the control unit 57. A program for executing workpiece fixing processing (see Fig. 4) to be described later is stored in the storage unit 56 of the present embodiment in advance.

Further, workpiece shape data 562, which is shape information (for example, design information) of the workpiece W, is stored in the storage unit 56 in advance.

The control unit 57 is configured to include, for example, a central processing unit (CPU) and the like, and controls the operation of each part of the control device 5. Specifically, the control unit 57 causes the display unit 53 to display various types of information or loads a program stored in advance in the storage unit 56 based on operation contents of the operation unit 52, and executes various types of processing in cooperation with the loaded program.

### [Workpiece fixing processing]

Subsequently, workpiece fixing processing of fixing the workpiece W in the fixing device 1 will be described.

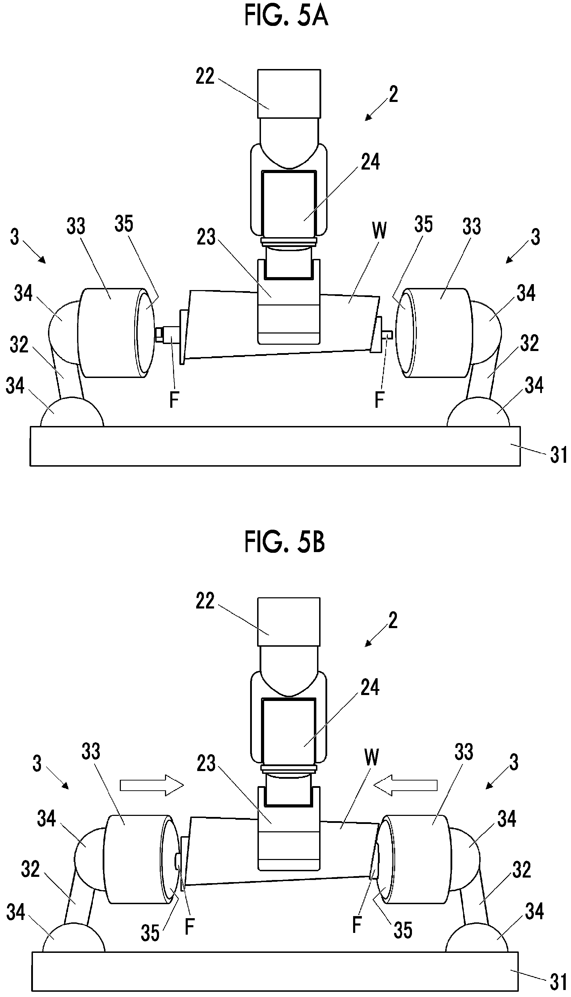

Fig. 4 is a flowchart showing a procedure of the workpiece fixing processing, and Figs. 5A and 5B are diagrams illustrating the workpiece fixing processing.

The workpiece fixing processing is processing of automatically fixing the workpiece W for machining work of the workpiece W before this work. For example, the control unit 57 of the control device 5 reads out and loads a corresponding program from the storage unit 56 based on a user's operation, so that the workpiece fixing processing is executed.

As shown in Fig. 4, in a case where the workpiece fixing processing is executed, first, the control unit 57 of the control device 5 causes the auxiliary arm 2 to pick up the workpiece W that is an object to be worked (Step S1).

More specifically, for example, a plurality of workpieces W are arranged on a predetermined workpiece mounting table in advance. The control unit 57 controls the operation of the auxiliary arm 2 to grip and pick up one workpiece W among the workpieces W. Each of the workpieces W arranged on the workpiece mounting table is disposed substantially in a predetermined direction and at a predetermined position, and the auxiliary arm 2 grips an approximately predetermined position (for example, substantially the middle portion in a longitudinal direction) of the workpiece W.

For example, a camera may be mounted on the end effector 23 of the auxiliary arm 2 so that the auxiliary arm 2 more accurately grips the predetermined position of the workpiece W.

Next, the control unit 57 causes the shape measuring instrument 4 to measure the shapes of the fixed portions F of the workpiece W (Step S2).

Here, the control unit 57 controls the auxiliary arm 2 to move the workpiece W to the position of the shape measuring instrument 4 in a state where the workpiece W is gripped by the auxiliary arm 2, and measures the shapes of the fixed portions F provided at both ends of the workpiece W with the shape measuring instrument 4 (see Figs 3A and 3B). The control unit 57 causes the shape measuring instrument 4 to measure the shape of the workpiece W while causing the auxiliary arm 2 to move the workpiece W, as necessary. The shape information of the workpiece W acquired by the shape measuring instrument 4 is output to the control device 5.

Next, the control unit 57 causes the auxiliary arm 2 to hold the workpiece W at a position between the pair of fixing arms 3 in a predetermined posture based on measurement results acquired in Step S2 (Step S3; Fig. 5A).

The position and the posture of the workpiece W held by the auxiliary arm 2 are the position and the posture of the workpiece W to be fixed by the pair of fixing arms 3, and are set in advance.

In this step, first, the control unit 57 estimates the posture of the workpiece W relative to the auxiliary arm 2 based on the shape information of the workpiece W acquired in Step S2. In this case, the control unit 57 refers to the shape information of the workpiece W stored in the workpiece shape data 562 as necessary. Then, the control unit 57 controls the auxiliary arm 2 to cause the workpiece W to be held at a predetermined position between the pair of fixing arms 3 in a predetermined posture.

Next, the control unit 57 causes the workpiece W, which is held in a predetermined posture in Step S3, to be pinched by the pair of fixing arms 3 (Step S4; Fig. 5B).

In this step, the control unit 57 moves the respective end effectors 33 of the pair of fixing arms 3 in a direction in which the end effectors 33 are brought close to each other in a state where the workpiece W is held at a predetermined position in a predetermined posture by the auxiliary arm 2, and causes the respective fixation portions 35 to come into contact with the fixed portions F provided at both ends of the workpiece W from both sides.

Next, the control unit 57 causes the fixation portions 35 of the respective fixing arms 3 to be in the fixing state and to fix the fixed portions F of the workpiece W (Step S5).

Accordingly, the workpiece W is firmly fixed to the pair of fixing arms 3.

Next, the control unit 57 releases the grip of the workpiece W performed by the auxiliary arm 2 (Step S6). Then, the control unit 57 returns, for example, the end effector 23 of the auxiliary arm 2 to a predetermined initial position (initial state).

The workpiece fixing processing ends here.

### [Technical effects of the present embodiment]

As described above, according to the present embodiment, the workpiece W is fixed by the fixing arms 3 in a state where the workpiece W is gripped and held in a predetermined posture by the auxiliary arm 2.

Accordingly, the workpiece W can be always fixed in the same posture without depending on the hands of a worker (human). Therefore, the workpiece W can be automatically and suitably fixed.

Further, according to the present embodiment, the shape of the workpiece W is measured by the shape measuring instrument 4 in a state where the workpiece W is gripped by the auxiliary arm 2, and the workpiece W is held in a predetermined posture by the auxiliary arm 2 based on the measurement results of the shape measuring instrument 4.

Accordingly, the shape of the workpiece W can also be automatically measured.

Further, according to the present embodiment, the fixation portions 35 of the fixing arms 3 are configured to be capable of taking a fixing state where the workpiece W is fixed and a fixing release state where the fixing state is released, based on a control command of the control device 5. The control device 5 causes the fixation portions 35 to be in the fixing release state in a normal state, and causes the fixation portions 35 to be in the fixing state in a state where the workpiece W is held in a predetermined posture by the auxiliary arm 2 and the fixing arms 3 are brought into contact with the workpiece W.

Accordingly, even though the fixed portions F of the workpiece W have a complicated shape, it is possible to suitably fix the fixed portions F without requiring, for example, a dedicated jig or the like.

Furthermore, since the fixation portions 35 are flexibly deformed to fix the workpiece W, there is less concern that chips, polishing powder, or the like generated during machining work is mixed into the fixation portions 35.

In addition, according to the present embodiment, the pair of fixing arms 3 is disposed to face each other at a predetermined interval and is configured to have a degree of freedom in a direction in which the fixation portions 35 for fixing the workpiece W are brought close to or moved away from each other.

Accordingly, the fixing arm 3 can be configured as a simple robot arm having a single degree of freedom.

Further, according to the present embodiment, the workpiece W is held at a position between the pair of fixing arms 3 in a predetermined posture by the auxiliary arm 2, and the respective fixation portions 35 are moved in a direction in which the fixation portions 35 are brought close to each other by the pair of fixing arms 3, so that the workpiece W is pinched.

Accordingly, since the fixed portions F provided at both ends of the workpiece W are fixed by the respective fixation portions 35 while the workpiece W is pinched by the pair of fixing arms 3, the workpiece W can be firmly fixed.

### [Others]

The embodiment of the present invention has been described above, but the present invention is not limited to the above-described embodiment.

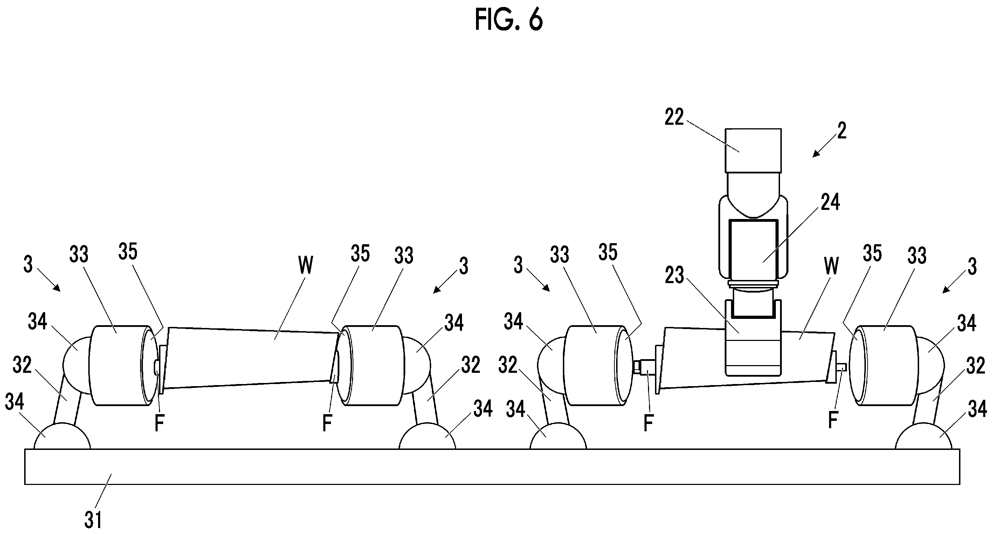

For example, a case where one auxiliary arm 2 and one pair of the fixing arms 3 are provided has been described in the above-described embodiment. However, for example, as shown in Fig. 6, a plurality of pairs of fixing arms 3 that can individually fix a plurality of workpieces W may be provided, and one auxiliary arm 2 may be configured to function for the plurality of pairs of the fixing arms 3.

Further, the auxiliary arm 2 may be any unit that can grip the workpiece W and be moved.

Furthermore, in the above-described embodiment, the two fixing arms 3 make a pair and fix the workpiece W. However, the number of the fixing arms 3 is not particularly limited as long as the workpiece W can be fixed. For example, in a case where the workpiece W has a triangular shape or the like, three fixing arms 3 may make a set and fix the workpiece W.

In addition, the fixing arm 3 may be configured to have multiple degrees of freedom, and may be flexibly operated such that the workpiece W has a predetermined posture.

Further, the fixing arm 3 may be any unit that moves the end effector 33 (fixation portion 35) with a single degree of freedom, and may be formed of, for example, not a robot arm but a slider or the like. Furthermore, the fixing arm 3 may be any unit that can fix the workpiece W.

In addition, in the above-described embodiment, the shape of the workpiece W (fixed portions F) is measured by the shape measuring instrument 4 after the auxiliary arm 2 grips the workpiece W. However, the shape of the workpiece W may be measured at any timing before the workpiece W is held in a predetermined posture (Step S3).

Further, in Step S3, the workpiece W is held in a predetermined posture based on the measurement results of the shape of the workpiece W and the workpiece shape data 562. However, in a case where information required for this is only the measurement results of the shape of the workpiece W, the workpiece shape data 562 may not be used.

Furthermore, the fixing device 1 that fixes the workpiece W before machining work has been described in the above-described embodiment. However, the fixing device 1 may be configured as a robot system together with a machining robot that performs the machining work itself. Accordingly, it is possible to achieve complete automation including the machining work.

For example, a machining robot that grips a tool may perform machining work on the workpiece W fixed to the fixing arms 3, and the auxiliary arm 2 may be configured to move the workpiece W, which has been completely subjected to the work, from the fixing arms 3 to a predetermined position. In this case, the fixing device 1 (a position at which the workpiece W is fixed) and the machining robot may be separated from each other. For example, the fixing arms 3 may be disposed on a conveyor, and may be configured to be moved by the conveyor between the fixing of the workpiece W performed by the auxiliary arm 2 and the machining work performed by the machining robot.

Further, in the above-described embodiment, "polishing (machining)" in which the workpiece is polished by a polishing tool has been described as an example of machining (machining work) to be performed after the workpiece W is fixed by the fixing device 1. However, the machining widely includes machining in which a machining tool is brought into contact with a workpiece to grind (machine) the workpiece, and also includes, for example, "grinding (machining)" and the like.

In addition, the details shown in the embodiment described above can be appropriately changed without departing from the scope of the invention.

### Industrial Applicability

As described above, the present invention is useful to automatically and suitably fix the workpiece.

### Reference Signs List

- 1: fixing device
- 2: auxiliary arm (arm unit)
- 3: fixing arm (fixing unit)
- 4: shape measuring instrument (measurement unit)
- 5: control device (control unit)
- 23: end effector
- 35: fixation portion
- 562: workpiece shape data
- W: workpiece (object to be worked)
- F: fixed portion

## Claims

1. A fixing device comprising:
an arm unit that moves an object to be worked;
a fixing unit that fixes the object to be worked; and
a control unit that controls operations of the arm unit and the fixing unit,
wherein the control unit causes the fixing unit to fix the object to be worked in a state where the object to be worked is gripped and held in a predetermined posture by the arm unit.

2. The fixing device according to claim 1, further comprising:
a measurement unit that measures a shape of the object to be worked,
wherein the control unit
causes the measurement unit to measure the shape of the object to be worked in a state where the object to be worked is gripped by the arm unit, and
causes the arm unit to hold the object to be worked in the predetermined posture, based on a measurement result of the measurement unit.

3. The fixing device according to claim 1,
wherein the fixing unit includes a fixation portion that fixes the object to be worked,
the fixation portion is configured to take a fixing state where the object to be worked is fixed and a fixing release state where the fixing state is released, based on a control command of the control unit, and
the control unit causes the fixation portion to be in the fixing release state in a normal state, and causes the fixation portion to be in the fixing state in a state where the object to be worked is held in the predetermined posture by the arm unit and the fixing unit is brought into contact with the object to be worked.

4. The fixing device according to claim 1,
wherein a plurality of the fixing units are provided to individually fix a plurality of the objects to be worked.

5. The fixing device according to claim 1,
wherein at least two fixing units making a pair are provided, and
the pair of fixing units is disposed to face each other at a predetermined interval and is configured to have a degree of freedom in a direction in which fixation portions for fixing the object to be worked are brought close to or moved away from each other.

6. The fixing device according to claim 5,
wherein the control unit
causes the arm unit to hold the object to be worked at a position between the pair of fixing units in the predetermined posture, and
causes the respective fixation portions to move in a direction in which the fixation portions are brought close to each other to cause the pair of fixing units to pinch the object to be worked.

7. A fixing device comprising:
an arm unit of an articulated robot that grips an object to be worked and holds the object to be worked in a predetermined posture; and
a fixing unit that includes a fixation portion fixing the object to be worked held in the predetermined posture.

8. An object fixing method for a fixing device including an arm unit that moves an object to be worked and a fixing unit that fixes the object to be worked, the method comprising:
a step in which a control unit causes the arm unit to grip the object to be worked and to hold the object to be worked in a predetermined posture; and
a step in which the control unit causes the fixing unit to fix the object to be worked held in the predetermined posture.

9. An object fixing program for a fixing device including an arm unit that moves an object to be worked and a fixing unit that fixes the object to be worked, the object fixing program causing a computer to function as:
a unit that causes the arm unit to grip the object to be worked and to hold the object to be worked in a predetermined posture; and
a unit that causes the fixing unit to fix the object to be worked held in the predetermined posture.
